# EUROPEAN PATENT SPECIFICATION

(11) **EP 2 475 870 B1**
(45) Date of publication and mention of the grant of the patent: **20.05.2015**
(21) Application number: 10766097.9
(22) Date of filing: 08.09.2010
(51) Int. Cl.: F03B 13/18

(54) **PUMPING DEVICE**
PUMPVORRICHTUNG
DISPOSITIF DE POMPAGE

(30) Priority: 09.09.2009 GB 0915779; 29.10.2009 GB 0918956
(43) Date of publication of application: 18.07.2012
(73) Proprietor: Dartmouth Wave Energy Limited, Dartmouth Devon TQ6 9BU (GB)
(72) Inventor: SMITH, Alvin, Dartmouth Devon TQ6 9DA (GB)
(74) Representative: Kent, Peter Joseph
(86) International application number: PCT/GB2010/051501
(87) International publication number: WO 2011/030149

(56) References cited:
- EP-A2- 2 113 657
- WO-A1-00/32931
- GB-A- 2 427 445
- US-A- 4 754 157
- US-A1- 2006 097 520
- US-A1- 2009 081 055

## Description

### Technical Field

The present invention relates to wave-powered pumping devices. More specifically, the present invention relates to a pumping device for use in tidal waters.

### Background

Wave-powered pumping devices are known. Typically these devices include a pump that is driven by the vertical displacement of a float located at the surface of a body of water, for example at the surface of the sea. Wave-powered pumping devices may be used to pump water through turbines to generate hydroelectricity, or they may be used to pump water to a reservoir onshore where it is stored for later use, for example to generate hydroelectricity on demand.

An example of a known pumping device is described in Applicant's granted patent GB 2453670 B, and shown herein in Figure 1. Referring to Figure 1, the known pumping device includes a pump supported on a submerged platform 30. The platform 30 is coupled to the sea bed 31 by a chain 28, and is supported upright in the water by an underwater float 21. The pump includes a piston 12 arranged for reciprocal motion within a cylinder 9. A connecting member 5 connects the piston 12 to a weighted float 2 arranged at the surface of the sea.

In use, the weighted float 2 rises with increasing wave height and falls under gravity as the wave passes. This vertical displacement of the weighted float 2 with passing waves drives the reciprocating movement of the piston 12 and connecting member 5 within the cylinder 9. The pump is double acting and operates as follows: on an upstroke of the piston 12, water is drawn into the cylinder 9 through an inlet valve 14 and simultaneously water is expelled from the cylinder 9 through an outlet valve 8 via a manifold 10; conversely, on a downstroke of the piston 12, water is drawn into the cylinder 9 through an inlet valve 7 and simultaneously water is expelled from the cylinder 9 through an outlet valve 13 via the manifold 10.

The platform 30 may be raised or lowered in the water to adjust the height of the pump to suit varying tidal conditions. To this end, the platform 30 comprises an air filled column 22, which is moveable in telescopic relation to a flooded cylinder 23. As the water level rises in the body of water, for example with a rising tide, the weighted float 2 also rises and lifts the connecting member 5 relative to the cylinder 9. Once the connecting member 5 reaches its maximum extension from the cylinder 9, the continuing upward travel of the weighted float 2 with the rising tide causes the air filled column 22 to extend relative to the flooded cylinder 23.

At its base, the flooded cylinder 23 includes a suction relief inlet valve 25 and a pressure relief outlet valve 26. As the air filled column 22 extends with rising tides, water is drawn through the suction relief inlet valve 25 into a chamber between the column 22 and the cylinder 23. Conversely, to allow the column 22 to retract with falling tides to lower the height of the pump, water is expelled from the chamber through the pressure relief outlet valve 26. The suction relief inlet valve 25 and the pressure relief outlet valve 26 are set to provide a hydraulic lock to hold the column 22 in a position that allows the pump 9 to operate within its normal stroke.

Adjusting the height of the pump in the water is important because it ensures that the pump is at the correct height to operate normally, i.e. the weighted float 2 can move up and down, and ensures that the components of the pumping device are protected from extreme loads and forces. For example, if the height of the pump was fixed, then at high tides the pump would be positioned too low in the water. This would result in the equilibrium position of the weighted float 2 being too far from the pump, which would prevent the piston 12 from operating on a full upstroke.

At high tides, if the equilibrium position of the weighted float 2 is too far from the pump, the connecting member 5 would extend significantly from the pump for long periods of time. In this extended position, the connecting member 5 would not be protected by the cylinder 9, and would be exposed to severe lateral forces due to wave movement in the water. The connecting member 5 is made of metal and has a small diameter in comparison to the internal diameter of the cylinder 9. The connecting member 5 extends through the pumping chamber, and hence a small diameter is required in order to maximise the pumping capacity of the device on the upward pumping stroke. As a result of its small diameter, the connecting member 5 could bend or buckle under lateral forces if extended from the cylinder 9 for long periods. Consequently it is necessary to have a height-adjustable platform to prevent the connecting member 5 from being extended from the cylinder 9 for long periods.

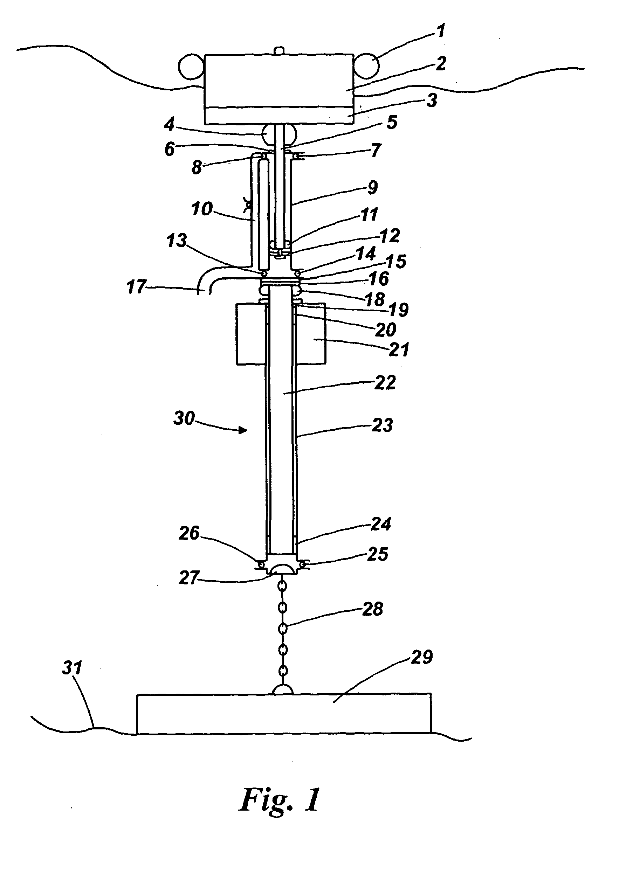

Whilst the system described above with reference to Figure 1 works well, the present invention aims to provide an alternative pumping device of simplified construction.

### Summary of the invention

According to a first aspect of the present invention there is provided a wave-powered pumping device for location in a body of water, the pumping device comprising: a submersible cylinder to be anchored to the bed of the body of water, the cylinder defining a bore; an underwater float acting on the cylinder, the underwater float being arranged to urge the cylinder into an upright orientation in the water; a surface float arranged to float at, or close enough to, the surface of the body of water in use to move up and down in the body of water in accordance with wave movement and tidal movement; and an elongate member depending from the surface float, the elongate member extending telescopically into the bore of the submersible cylinder to define a pumping chamber within the cylinder; wherein: the volume of the pumping chamber varies with wave movement in a pumping cycle to draw fluid into the pumping chamber on an upstroke of the elongate member and to pump fluid out of the pumping chamber on a downstroke of the elongate member; the length of the pumping chamber varies with tidal movement to adjust to changing tidal depth by extending or retracting the elongate member relative to the cylinder while effective pumping cycles continue across a tidal range without needing to move the cylinder with respect to the bed of the body of water; and to the extent that the elongate member is retracted into the bore of the cylinder, the elongate member occupies a majority of the cross-sectional area of the bore.

The present invention is simpler, cheaper and more effective than prior art systems. Cost savings are at least partly attributable to the use of fewer parts compared to known systems. For example, the present invention does not require a separate height-adjustable platform and associated valves to raise and lower the cylinder in the water to accommodate tidal variations. Instead, the present invention extends or retracts the elongate member telescopically with respect to the cylinder to compensate for tidal changes. At high tides, the elongate member will be extended significantly from the cylinder, whilst at low tides the elongate member will be mainly retracted within the cylinder.

The elongate member is significantly larger than corresponding elongate members (or connecting rods) of known systems. In contrast to prior art systems, the elongate member of the present invention has a large diameter and occupies the majority of the cross-sectional area of the bore where retracted within the cylinder.

The large diameter elongate member is able to resist bending or buckling from the strong lateral forces it experiences in the water when extended from the cylinder. The ability to resist deformation in this way allows the elongate member to remain in a highly-extended or exposed position for longer periods than prior art systems. Consequently, the device of the present invention is able to adjust telescopically to tidal changes whereas prior art systems generally utilise a height-adjustable cylinder to prevent the connecting rod from being extended for long periods.

Typically the elongate member has a diameter that is at least 90% of the diameter of the bore. The diameter of the bore may be in the range 500-1600 mm. Preferably the bore has a diameter of at least 550 mm. The diameter of the elongate member may be in the range 500-1500 mm. It will of course be appreciated that the device may be much larger if it is to be used in very deep waters or in bodies of water having very large waves or tidal ranges. The device may also be scaled up to pump even larger volumes of fluid. Consequently, it is conceivable that the size of the various components could exceed these ranges.

The elongate member may have a substantially circular cross section and/or a substantially uniform cross-sectional area along its length. The elongate member functions as a piston. A piston head may be provided at a lower end of the elongate member, the lower end being remote from the surface float. The piston head may be a separate part coupled to the elongate member or it may be defined by a closed lower end of the elongate member. In other embodiments, an open-ended elongate member may be employed. An outlet may be provided at an upper end of the elongate member. The outlet may communicate with a generator mounted above the elongate member.

The device is preferably configured such that the downstroke of the elongate member is the main (or possibly only) working stroke. In embodiments where the elongate member has a closed lower end, the main pumping chamber is below the elongate member when the cylinder is upright. However, where the elongate member is open-ended, the pumping chamber may extend upwardly within the elongate member. In both cases, a t least a majority of the pumping chamber is advantageously below an uppermost end of the cylinder when the cylinder is upright. Also, in both cases, the elongate member does not occupy or extend through the pumping chamber and hence there is no need to restrict the size of the elongate member in the present invention.

To facilitate telescopic tidal adjustment, the elongate member is significantly longer than prior art connecting rods. Similarly, the cylinder is significantly taller than prior art cylinders. Typically, the cylinder and the elongate member would each be ten to twenty metres long, although longer or shorter parts could be manufactured to suit the specific characteristics of a particular body of water. Preferably the cylinder and the elongate member are at least ten metres in length. The device is suitable for use in bodies of water in which tides cause extreme changes in depth. For example, changes of depth of up to twelve metres occur in some bodies of water. To accommodate this tidal range, a fifteen metre cylinder and a fifteen metre elongate member may be used. This would still allow a further three metres of travel for wave-driven reciprocation of the elongate member at high tides. Of course the cylinder and elongate member could be made longer still to accommodate even larger waves at high tides if required.

The elongate member may be made of metal or reinforced concrete. Alternatively the elongate member may be made from plastics materials. Preferably the elongate member is made of high-density polyethylene (HDPE). The elongate member may be of composite construction. In particular, the elongate member may be made from fibre-reinforced composite materials. For example, the elongate member may be formed from fibre-reinforced plastics materials, such as glass- or nylon-fibre reinforced HDPE.

Conveniently, the elongate member may be hollow, or may otherwise define an internal cavity. For example, the elongate member may be tubular and have a substantially circular cross-section. Ballast such as aggregate, water, metal or other such dense material may be provided within the cavity to stabilise the elongate member in the water. The ballast increases the weight of the elongate member and assists the downward pumping stroke.

A clearance region defined between the cylinder and the elongate member within the bore may be annular. The clearance region may have a width that is less than five percent of the diameter of the elongate member. Preferably the width of the clearance region is less than two percent of the diameter of the elongate member, and more preferably less than 1.5 percent. Typically the width of the clearance region is in the range of five to ten millimetres. Preferably, the width of the clearance region is approximately seven millimetres.

The elongate member is preferably a sliding fit within the bore. Bearings may be provided within the clearance region to facilitate the sliding fit. A first bearing may be mounted to an outer surface of the elongate member. The first bearing may be mounted at a lower end portion of the elongate member. A second bearing may be mounted to an inner wall of the cylinder. The second bearing may be located within an upper end portion of the cylinder. This configuration of bearings helps to maintain the elongate member in concentric relation within the cylinder.

The device may be configured such that in use, plant life or algae accumulates in the clearance region to lubricate movement of the elongate member within the cylinder. A scraper may be provided at an entrance to the clearance region to remove an excess thickness of plant life or algae during movement of the elongate member within the cylinder. The scraper also prevents barnacles, molluscs etc settling on this part of the cylinder. The device may be configured such that in use, a film of water in the clearance region lubricates movement of the elongate member within the cylinder.

The surface float may include a buoyant portion and a ballast portion. The buoyant portion may be air filled. The ballast portion may include a tank, which may contain aggregate or water as a ballast. If water is used, the amount of water in the tank may be controlled dynamically to vary the ballast if required. For example, in stormy conditions sufficient water may be allowed into the tank to sink the surface float below the surface of the sea. When conditions are calmer, air may be pumped into the tank from, for example, an accumulator tank, to expel some or all of the water from the tank to raise the surface float once again. Alternately, if desired, the surface float may be sunk below the surface in normal use whilst remaining close enough to the surface to reciprocate in accordance with wave movement. The ballast portion may additionally or alternatively comprise a weight made of concrete or metal e.g. cast iron.

The cylinder may be anchored to the bed of the body of water by a tether such as a rope, chain, cable etc. Using a tether is convenient and inexpensive when compared to a rigid coupling. However, rigid couplings such as ball joints that enable the cylinder to pivot about an upright position are also contemplated by the invention. The tether allows the height of the cylinder in the body of water to be determined and/or adjusted easily if required. The cylinder may include a flange to which the tether can attach. The cylinder may have a single tethering point to which one or more tethers can attach. Preferably a single tether is used to couple the cylinder to the bed of the body of water. Using a single tether allows the device to move freely about an anchorage point to adjust to the prevailing current. A single tether prevents 'snatching', which can be a problem in multiply-tethered systems.

The underwater float is substantial and of sufficient buoyancy to resist the downward forces of the elongate member and the surface float during a downward pumping stroke. For tethered systems, the underwater float has sufficient buoyancy to ensure that the tether remains taut during a downward pumping stroke. This configuration contrasts with most prior art systems which must be rigidly coupled to the bed of the body of water or rigidly coupled to a fixed platform if the downstroke is used as a working stroke. Consequently, the pumping device of the present invention may be free-standing and self-supporting. In contrast to many prior art systems, the pumping device does not require additional stabilising means to support it upright in the water.

The underwater float suitably acts on an upper end of the cylinder. In preferred embodiments of the invention, the underwater float is in the form of a jacket secured around the upper end of the cylinder. The jacket may be air filled. In this configuration, where the elongate member is closed-ended, the part of the bore that defines the pumping chamber extends within the cylinder to a level below the underwater float. Similarly, where the elongate member is open-ended, the majority of the pumping chamber would still be below the underwater float. This contrasts with many prior art systems, in which the equivalent bore and pumping chamber are located above an underwater float. Advantageously, the present invention provides a lower centre of gravity, and hence is more stable than free-standing prior art devices.

The pumping device includes an outlet in communication with the pumping chamber. A pipe or hose may connect to the outlet for channelling pumped fluid to a remote location. Advantageously, the outlet may be provided at a lower end region of the cylinder. Providing the outlet at a low level ensures that the pipe or hose does not pull the cylinder away from its otherwise upright position in the water. In addition, providing the outlet at a low level means that the device is self-flushing: silt or other debris that sinks to the bottom of the cylinder can be flushed out though the outlet on a downward pumping stroke.

The pumping device may also include an inlet in communication with the pumping chamber. Similarly, the inlet may be provided at the lower end region of the cylinder. At this location, the surrounding water is at a relatively high pressure due to depth. Accordingly, fluid entering the pumping chamber through the inlet assists and accelerates the upward movement of the elongate member on an upstroke. Providing the inlet at a sufficiently low level ensures that this effect is realised for all tidal conditions, including at low tides when the elongate member is retracted within the cylinder to its maximum extent. An additional benefit to providing the inlet at a low level is that this minimises the exposure of the inlet to direct sunlight and hence minimises weed growth and the accumulation of plant life, algae, molluscs, barnacles etc on and around the inlet.

The pumping device is preferably configured to pump water from the surrounding body of water. In this case, the inlet may communicate with the surrounding water. The pumped water may be used in the generation of hydroelectricity or for desalination for example. Alternatively, the pumping device could be configured to pump other types of fluid, for example oil or gas, by connecting the inlet to an appropriate fluid reservoir.

Preferably the device is single-acting. However, double-acting devices are also within the scope of the invention.

According to a second aspect of the present invention, there is provided a method of pumping fluid using a wave-powered pumping device, the pumping device comprising a submerged cylinder urged towards an upright position by buoyancy, an elongate member in telescopic relation within the cylinder, and a float arranged above the cylinder and connected to the elongate member, the float and the elongate member being arranged to reciprocate relative to the cylinder with wave movement and tidal movement in the body of water, wherein the method comprises: pumping fluid during a wave-driven pumping cycle, whereby wave movement in the body of water causes the float and elongate member to reciprocate relative to the cylinder at a frequency and to an extent driven by the frequency and amplitude of waves in the body of water; and adjusting to tidal variation in the body of water during a tidal period by extending or retracting the elongate member telescopically relative to the cylinder while maintaining the wave-driven pumping cycle to pump fluid throughout the tidal period.

The time between successive wave peaks in the sea may range between seven to twelve seconds; more commonly it is between eight to nine seconds, and typically it is about 8.5 seconds. A wave-driven pumping cycle will have a time span approximately equal to the time interval between successive wave peaks.

The tidal period, defined herein as the time between successive high tides, is dependent upon the body of water, but is usually approximately twelve and a half hours. When placed in a body of water having this tidal period, the average extension of the elongate member from the cylinder will be at a maximum approximately every twelve and a half hours at the time of high tide.

The method may include operating the device in bodies of water having a tidal range of up to twelve metres. By tidal range, it is meant the change in average depth of the water between low and high tides. It will be appreciated that the tidal range in a body of water varies with the lunar cycle, with maximum tidal ranges occurring during spring tides, and minimum tidal ranges occurring during neap tides. The cylinder and elongate member are preferably sufficiently long to accommodate a full tidal range, including a spring tide, whilst allowing wave-driven reciprocation to continue even at high tide. Consequently, the method may include extending the elongate member by up to twelve metres (and possibly further during spring tides) from the cylinder to adjust to a high tide, whilst allowing the elongate member to extend further from the cylinder to accommodate wave-driven reciprocation at high tide. In force six conditions, i.e. a strong breeze, the peak to trough height of waves in the sea is typically between three to four metres. In force nine conditions, i.e. a strong gale, the wave height may be as much as seven to ten metres, whilst in force eleven or twelve winds, i.e. violent storms or hurricanes, the wave height may reach sixteen metres. Accordingly, the method may include operating the pumping device in a body of water having waves of this magnitude.

The method may comprise substantially maintaining the height of the cylinder in the body of water during a tidal period. Maintaining the height of the cylinder may involve maintaining a substantially constant separation between the bed of the body of water and the base of the cylinder.

The inventive concept encompasses a single-acting wave-powered pumping device comprising a submersible cylinder tethered to the bed of a body of water and supported upright in the water by an underwater float; the cylinder defining a bore within which an elongate piston member is telescopically received; the piston member being connected at an upper end to a surface float arranged above the cylinder so as to reciprocate in the water in accordance with wave movement to drive the piston member within the bore; the piston member being of substantially uniform cross-section along at least that part of its length that is received within the bore in use, and wherein said cross-section occupies a majority of the cross-sectional area of the bore.

The inventive concept also encompasses a method of pumping fluid using a wave-powered pumping device, the method comprising: submerging a cylinder in a body of water, the cylinder defining a bore; anchoring the cylinder to the bed of the body of water; maintaining the cylinder in a substantially upright orientation using an underwater float; arranging a surface float at, or close enough to, the surface of the body of water so that the surface float moves up and down in the body of water in accordance with wave movement and tidal movement; extending an elongate member telescopically into the bore of the cylinder to define a pumping chamber within the cylinder, the elongate member being connected at an upper end to the surface float; utilising an upstroke of the elongate member to draw fluid into the pumping chamber with increasing wave height; utilising a downstroke of the elongate member to pump fluid out of the pumping chamber with decreasing wave height; and extending or retracting the elongate member relative to the cylinder with tidal movement to vary the length of the pumping chamber in order to adjust the device to changing tidal depth while effective pumping cycles continue across a tidal range.

### Brief description of the drawings

Reference has already been made to Figure 1, which shows a known pumping device, by way of background to the present invention.

In order that the invention may be more readily understood, reference will now be made, by way of example, to the following figures, in which:
Figure 2a is a sectional side view of a single-acting pumping device according to a first embodiment of the present invention, in which the device is in a low tide condition;
Figure 2b is a cross-section taken along the line A-A in Figure 2a;
Figure 2c corresponds to Figure 2a but shows the pumping device in a high tide condition;
Figure 3 is a sectional side view of a single-acting pumping device according to a second embodiment of the present invention;
Figure 4 is a sectional side view of a single-acting pumping device according to a third embodiment of the present invention; and
Figure 5 is a sectional side view of a double-acting pumping device according to a fourth embodiment of the present invention.

### Detailed description

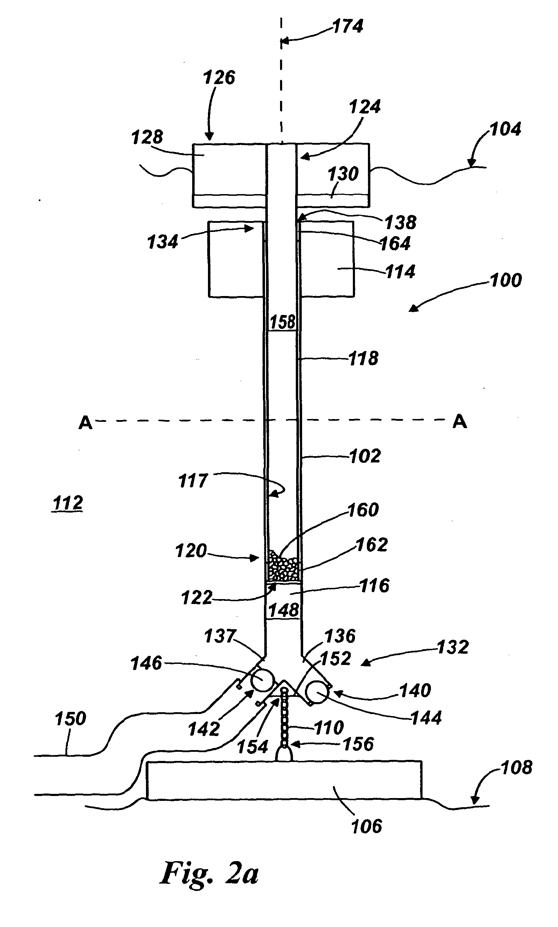

Referring to Figure 2a, a pumping device 100 in accordance with a first embodiment of the invention is shown located at sea. By way of an overview, the pumping device 100 includes a tubular cylinder 102, which is submerged below the surface 104 of the sea. The cylinder 102 is tethered to a concrete block 106 on the sea bed 108 via a chain 110, and supported substantially upright in the water 112 by an underwater float 114. The cylinder 102 has a cylindrical bore 116 defined by a circular internal wall 117 of the cylinder 102. An elongate member 118 is telescopically received within the bore 116. The elongate member 118 has a lower end 120 connected to a piston head 122, and an upper end 124 connected to a surface float 126 arranged at the surface 104 of the sea. The piston head 122 and elongate member 118 reciprocate within the bore 116 as the surface float 126 moves up and down in the water 112 driven by wave movement. As shown, the elongate member 118 is at the bottom of its downstroke at low tide.

The various components of the pumping device will now be described in more detail, still with reference to Figure 2a. It should be appreciated that this drawing is not to scale.

The surface float 126 has a diameter of approximately ten metres and comprises an air-filled buoyant portion 128 and a ballast portion 130 in the form of a tank containing sea water. The volume of water in the tank may be controlled dynamically to adjust the ballast if required. For example, in stormy conditions sufficient water may be allowed into the tank to sink the surface float 126 below the surface 104 of the sea. When conditions are calmer, air may be pumped into the tank from, for example; an accumulator tank, to expel some or all of the water from the tank to raise the surface float 126 once again.

The cylinder 102 is approximately fifteen metres long and extends from a closed lower end 132 towards an open upper end 134. The lower end 132 has the shape of an inverted Y, with arms 136, 137 of the inverted Y extending downwards and outwards towards the sea bed 108. The open upper end 134 defines an entrance 138 to the bore 116. The entrance 138 faces the surface 104 of the sea when the cylinder 102 is upright as shown.

The cylinder 102 includes an inlet 140 and an outlet 142, which are defined by the respective arms 136, 137 of the inverted-Y-shaped lower end 132. The inlet 140 and outlet 142 include respective inlet and outlet valves 144, 146, which communicate with a pumping chamber 148 defined within the bore 116. An outlet pipe 150 or transfer hose for communicating pumped fluid to a remote location is attached to the outlet branch 137 of the cylinder 102. A connecting flange 152 is provided between the arms 136, 137 of the Y-shaped lower end 132. An upper end 154 of the chain 110 is attached to the connecting flange 152, whilst a lower end 156 of the chain 110 is attached to the concrete block 106 on the sea bed 108 to anchor the cylinder 102 to the sea bed 108.

The tubular elongate member 118 is approximately fifteen metres long and made from high-density polyethylene (HDPE). An internal cavity 158 of the elongate member 118 contains aggregate 160, which acts as a ballast to stabilise the elongate member 118 in the water 112.

A first guide bearing 162 is mounted externally to the lower end 120 of the elongate member 118, whilst a second guide bearing 164 is mounted internally within the bore 116 at the open upper end 134 of the cylinder 102. The first and second guide bearings 162, 164 maintain the elongate member 118 and the cylinder 102 in concentric relation, and assist the smooth travel of the elongate member 118 and associated piston head 122 as they reciprocate within the bore 116.

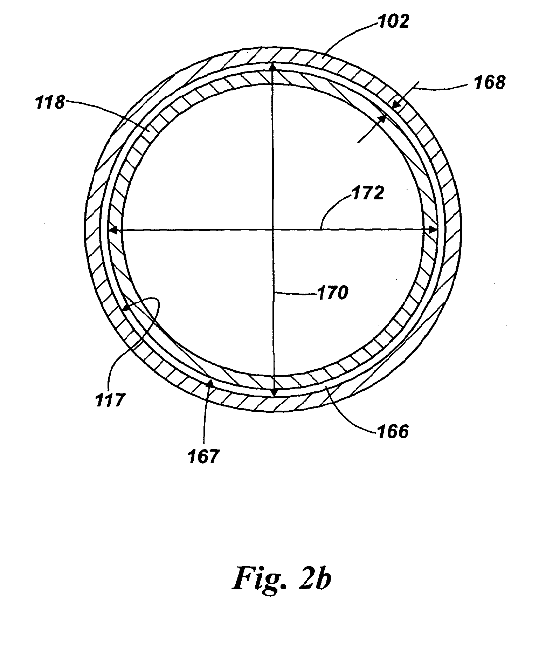

Referring to Figure 2b, this shows a cross-section through the cylinder 102 and the elongate member 118 taken along the line A-A in Figure 2a. A narrow clearance region 166 is defined between an external surface 167 of the elongate member 118 and the internal wall 117 of the cylinder 102. The radial clearance between the cylinder 102 and the elongate member 118, indicated by arrows 168, is approximately seven millimetres, which is just large enough to accommodate the first guide bearing 162 shown in Figure 2a. The diameter of the bore 116, indicated by the double-headed arrow 170, is 550 mm. The outer diameter of the elongate member 118, indicated by the double-headed arrow 172, is 536 mm. Consequently, the elongate member 118 has a cross-sectional area that occupies the majority of the cross-sectional area of the bore 116. It is important to note that this configuration is in contrast to prior art systems, for example the device shown in Figure 1, which utilises an elongate member 5 of considerably smaller diameter than the diameter of the corresponding bore. Consequently, that elongate member 5 occupies a minority of the cross-sectional area of that bore.

Referring again to Figure 2a, the underwater float 114 is in the form of a collar that connects around the upper end 134 of the cylinder 102. The underwater float 114 is of substantial buoyancy, sufficient to support the cylinder 102 upright in the water 112 so that the chain 110 remains taut, even on a vigorous downstroke of the elongate member 118 and associated piston head 122 within the bore 116.

The piston head 122 is disc-shaped and lies in a plane orthogonal to a longitudinal axis 174 of the bore 116. An annular sealing ring (not shown) surrounds the piston head 122 and abuts the internal wall of the cylinder 117 to form a seal between the pumping chamber 148 and the clearance region 166.

The pumping chamber 148, which is of varying volume, is below the piston head 122 when the cylinder 102 is upright as shown in Figure 2a. The volume of the pumping chamber 148 varies in accordance with the swept volume of the cylinder 102 as the elongate member 118 and associated piston head 122 reciprocate within the bore 116. The swept volume is dependent upon the reciprocal motion of the surface float 126, which is in turn dependent upon the height of the waves in the water 112 at any given time.

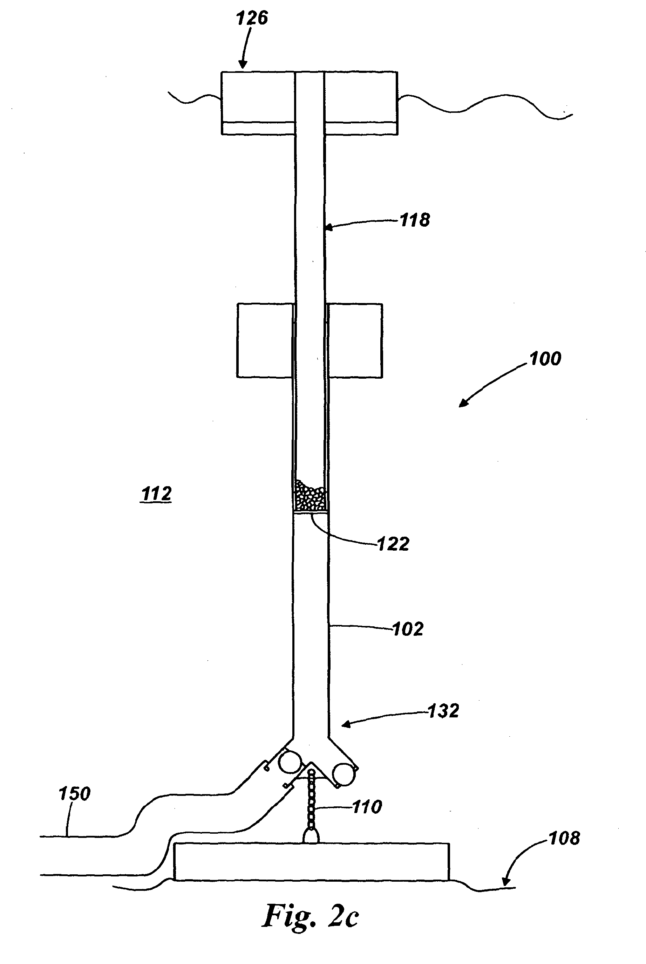

The operation of the pumping device 100 will now be described with reference again to Figures 2a and 2c.

Referring first to Figure 2a, in use, as wave height increases at the surface 104 of the sea, the buoyancy of the surface float 126 causes it to move upwards with a rising wave. This upward movement lifts the elongate member 118 and piston head 122 within the bore 116. During this upstroke, the rising piston head 122 creates a negative pressure in the pumping chamber 148, which causes the inlet valve member 144 to move away from its seat and water to be drawn into the pumping chamber 148 through the inlet 144.

As a wave passes, the surface float 126 falls downwards under gravity, assisted by the weight of the ballast portion 130 and also by the weight of the elongate member 118 and the aggregate 160 contained therein. This downward motion of the surface float 126 drives the elongate member 118 and piston head 122 downwards within the bore 116. During this downstroke, the piston head 122 pressurises the water in the pumping chamber 148, which causes the outlet valve member 146 to move away from its seat and water to be expelled from the pumping chamber 148 through the outlet 142. The water is pumped through the outlet pipe 150 towards hydroelectric turbines or to a reservoir (both not shown) where it may be stored for later use. Alternatively, the pumping device 100 may be used to pump water through a reverse-osmosis desalination system.

An upstroke followed by a downstroke constitutes one complete cycle of the pumping device 100. Notably, the pumping device 100 of Figure 2a is single acting and utilises the downstroke of the elongate member 118 and piston head 122 as the main pumping stroke or main working stroke. This is in contrast to most prior art single-acting pumping devices, which generally utilise the upstroke of the elongate member and piston head as the working stroke; such devices suffer from the disadvantage that the elongate member occupies a portion of the pumping chamber and hence reduces the effective volume of the pumping chamber. By utilising the downstroke as the main pumping stroke in the configuration shown in Figure 2a, the elongate member 118 does not occupy the pumping chamber 148, and hence the volume of water pumped on the main working stroke corresponds to the entire swept volume of the cylinder 102 by the piston head 122.

Also in contrast to many prior art devices, the single-acting pumping device 100 of Figure 2a does not require a seal between the cylinder 102 and the elongate member 118 at the open upper end 134 of the cylinder 102 because pressure loss at this point is not a concern due to the seal provided by the sealing ring around the piston head 122. The pumping device 100 is self-lubricating and utilises the surrounding water 112 as a lubricant. In addition, the device 100 is self-flushing: silt or other debris that sinks to the bottom of the cylinder 102 is flushed out though the outlet 142 and the outlet pipe 150 on the downward pumping stroke.

The ability of the pumping device 100 to self-adjust to rising and falling tides will now be described with reference to Figure 2c. Referring to Figure 2c, as the depth of the water 112 increases with a rising tide, the surface float 126 lifts the elongate member 118 and associated piston head 122 to establish a new equilibrium position in the water 112. In this high tide equilibrium position, the elongate member 118 is significantly extended from the cylinder 102. In this extended position, a significant proportion of the elongate member 118 is exposed to lateral forces from wave movement for several hours. However, in contrast to prior art systems, the elongate member 118 is able to withstand these forces due to its large diameter, which is almost as large as the diameter of the cylinder 102.

The chain 110 ensures that the separation between the lower end 132 of the cylinder 102 and the sea bed 108 remains substantially constant as the device 100 self-adjusts to rising and falling tides; expressed in other words, the height of the cylinder 102 remains substantially fixed whilst the elongate member 118 adjusts telescopically to rising and falling tides.

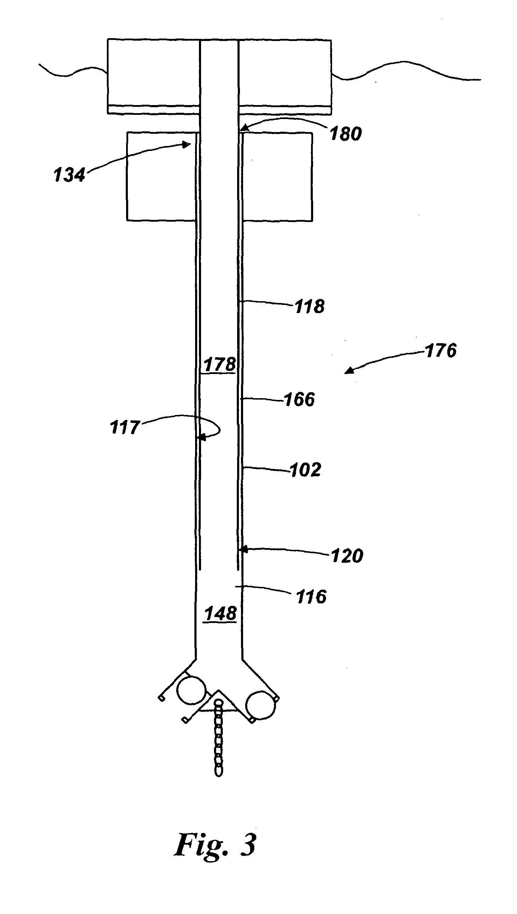

Referring to Figure 3, this shows a pumping device 176 in accordance with a second embodiment of the present invention. The same reference numerals are used in Figures 3 and 2a to denote equivalent components. The pumping device 176 is similar in most respects to the pumping device 100 of Figure 2a, except that the pumping device 176 does not include a piston head at the lower end 120 of the elongate member 118. Instead, the elongate member 118 has an open lower end 120. In common with the first embodiment, the elongate member 118 is hollow. Consequently, the pumping chamber 148 additionally extends upwards into the elongate interior 178 within the elongate member 118.

In this embodiment, a seal 180 is provided between the cylinder 102 and the elongate member 118 at the upper end 134 of the cylinder 102 to prevent water escaping from the clearance region 166. This embodiment does not include bearings between the elongate member 118 and the internal wall 117 of the cylinder 102. Instead, a film of sea water in the clearance region 116 lubricates the sliding motion of the elongate member 118 within the bore 116 of the cylinder 102. Furthermore, algae or plant life accumulates in the clearance region 166, which acts as an additional lubricant. Whilst an outlet pipe and coupling to the sea bed have been omitted in Figure 3, it will be appreciated that these components may be similar to those shown in Figure 2a.

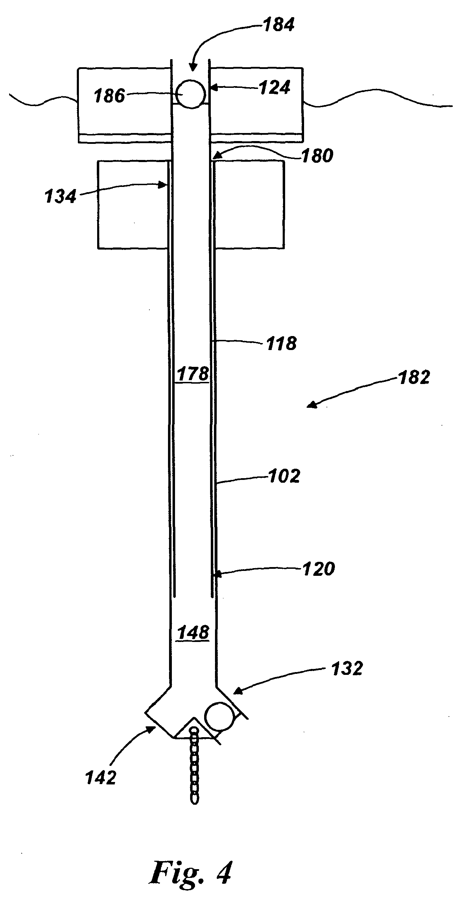

Referring to Figure 4, this shows a pumping device 182 in accordance with a third embodiment of the present invention. The same reference numerals are used in Figure 4 to denote components that are equivalent to components in Figures 3 and 2a. The pumping device 182 of Figure 4 is similar to the pumping device 176 of Figure 3, in so far as it is bearingless, and has an open-ended elongate member 118 and seal 180 at the upper end 134 of the cylinder 102. However, the pumping device 182 of Figure 4 has been modified so that a surface delivery outlet 184 is provided at the upper end 124 of the elongate member 118.

The surface delivery outlet 184 communicates with the elongate interior 178 of the elongate member 118, which is part of the pumping chamber 148. A ball-valve element 186 is provided within the surface delivery outlet 184 for controlling the flow of fluid therethrough. The surface delivery outlet 184 may communicate with an onboard generator or other surface equipment. The outlet 142 at the lower end 132 of the cylinder 102 has been blanked off as it is not required in this embodiment. Whilst a coupling to the sea bed has again been omitted in Figure 4, it will be appreciated that an arrangement similar to that shown in Figure 2a may be employed.

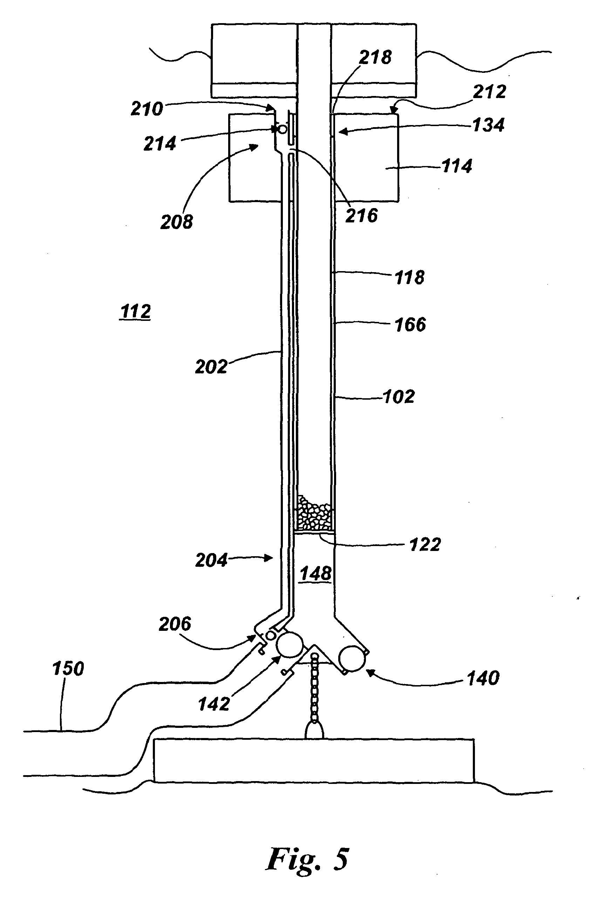

Referring now to Figure 5, this shows a pumping device 200 in accordance with a fourth embodiment of the present invention. The same reference numerals are used in Figures 5 and 2a to denote equivalent components. The pumping device 200 is similar in most respects to the pumping device 100 of Figure 2a, except that it has been modified to make it double-acting. Therefore, in contrast to the first embodiment, the pumping device 200 pumps water on both an upstroke and on a downstroke of the elongate member 118 and associated piston head 122.

In addition to the main components described above in relation to Figure 2a, the pumping device of Figure 5 includes a manifold in the form of a conduit 202 extending parallel and external to the cylinder 102. The conduit has a lower end 204 that includes a manifold outlet valve 206 in communication with the outlet 142 of the cylinder 102. An upper portion 208 of the conduit 202 extends through the underwater float 114 and terminates at an upper end 210, which is substantially flush with an upper surface 212 of the underwater float 114. The upper end 210 of the conduit 202 communicates with the surrounding sea water 112 via a manifold inlet valve 214. The upper portion 208 of the conduit 202 also includes a manifold feed channel 216 in communication with the clearance region 166 between the cylinder 102 and the elongate member 118. A seal 218 is provided between the cylinder 102 and the elongate member 118 at the upper end 134 of the cylinder 102 in this embodiment to prevent water escaping from the clearance region 166.

On a downstroke, the descending elongate member 118 and associated piston head 122 force water out of the pumping chamber 148 through the outlet 142 and along the outlet pipe 150 in much the same way as the device 100 of Figure 2a. However, the pumping device 200 of Figure 5 also draws water into the sealed clearance region 166 on the downstroke via the manifold inlet valve 214 and through the manifold feed passage 216.

On an upstroke, in addition to drawing water into the pumping chamber 148 via the cylinder inlet 140, the rising elongate member 118 and associated piston head 122 force water out of the clearance region 166, through the manifold feed passage 216, down through the conduit 202, through the manifold outlet valve 206 and cylinder outlet 142 and along the outlet pipe 150.

As the clearance region 166 is narrow, the pumping device 200 pumps significantly more water on a downstroke than on an upstroke. However, the contribution of water pumped on the upstroke usefully increases the aggregate volume of the water pumped by the pumping device 200.

The fourth embodiment is configured to adjust telescopically to rising and falling tides in the same way as the first embodiment described above.

Various modifications may be made to the above examples without departing from the scope of the invention as defined in the accompanying claims. For example, whilst the above examples describe coupling the cylinder 102 to the sea bed 108 using a chain 110, it will be appreciated that the cylinder 102 could be attached to the sea bed 108 in other ways. For example, the cylinder 102 could retained by a pivot coupling.

Also, whereas some of the embodiments described above include a disc-shaped piston head 122 coupled to the lower end 120 of the elongate member 118, it will be appreciated that in other embodiments of the invention, the piston head 122 may be integrally formed with the elongate member 118. For example, the piston head 122 may be defined by the lower end 120 of the elongate member 118.

Furthermore, whilst the devices 100, 176, 182, 200 described above are configured to pump water 112 from the body of water, it will be appreciated that other fluids, for example oil or gas, may be pumped by connecting the inlet 140 to an appropriate fluid reservoir.

## Claims

1. A wave-powered pumping device (100, 176, 182, 200) for location in a body of water, the pumping device comprising:
a submersible cylinder (102) to be anchored to the bed (108) of the body of water, the cylinder defining a bore (116);
an underwater float (114) acting on the cylinder, the underwater float being arranged to urge the cylinder into an upright orientation in the water;
a surface float (126) arranged to float at, or close enough to, the surface of the body of water in use to move up and down in the body of water in accordance with wave movement and tidal movement; and
an elongate member (118) depending from the surface float, the elongate member extending telescopically into the bore of the submersible cylinder to define a pumping chamber (148) within the cylinder; wherein:
the volume of the pumping chamber varies with wave movement in a pumping cycle to draw fluid into the pumping chamber on an upstroke of the elongate member and to pump fluid out of the pumping chamber on a downstroke of the elongate member;
the length of the pumping chamber varies with tidal movement to adjust to changing tidal depth by extending or retracting the elongate member relative to the cylinder while effective pumping cycles continue across a tidal range without needing to move the cylinder with respect to the bed of the body of water; and
to the extent that the elongate member is retracted into the bore of the cylinder, the elongate member occupies a majority of the cross-sectional area of the bore.

2. The device of Claim 1, wherein the device is configured such that the downstroke of the elongate member (118) is the main or only working stroke.

3. The device of Claim 1 or Claim 2, further comprising an inlet (140) at a lower end region (132) of the cylinder (102), the inlet communicating with the pumping chamber (148) and being configured to allow fluid into the pumping chamber on an upstroke of the elongate member (118).

4. The device of any preceding claim, wherein the elongate member (118) has an internal cavity (178) that contains ballast.

5. The device of any preceding claim, wherein a clearance region (166) is defined between the cylinder (102) and the elongate member (118) within the bore (116), the clearance region having a width that is less than 2 % of the diameter of the elongate member.

6. The device of Claim 5, wherein the elongate member (118) is a sliding fit within the bore (116).

7. The device of Claim 6, wherein bearings (162, 164) are provided within the clearance region (166).

8. The device of any of Claims 5 to 7, wherein the device is configured such that in use, plant life or algae accumulates in the clearance region (166) to lubricate movement of the elongate member (118) within the cylinder (102).

9. The device of Claim 8, wherein a scraper is provided at an entrance to the clearance region (166) to remove an excess thickness of plant life during movement of the elongate member (118) within the cylinder (102).

10. The device of any of Claims 5 to 9, wherein the device is configured such that in use, a film of water in the clearance region (166) lubricates movement of the elongate member (118) within the cylinder (102).

11. The device of any preceding claim, wherein the cylinder (102) includes a single tethering point to which a tether (110) can attach to anchor the cylinder to the bed (108) of the body of water.

12. The device of any preceding claim, wherein the elongate member (118) has a diameter that is at least 90% of the diameter of the bore (116).

13. A method of pumping fluid using a wave-powered pumping device according to claim 1 (100, 176, 182, 200), the pumping device comprising a submerged cylinder (102) urged towards an upright position by buoyancy, an elongate member (118) in telescopic relation within the cylinder, and a float (126) arranged above the cylinder and connected to the elongate member, the float and the elongate member being arranged to reciprocate relative to the cylinder with wave movement and tidal movement in the body of water, wherein the method comprises:
pumping fluid during a wave-driven pumping cycle, whereby wave movement in the body of water causes the float and elongate member to reciprocate relative to the cylinder at a frequency and to an extent driven by the frequency and amplitude of waves in the body of water; and
adjusting to tidal variation in the body of water during a tidal period by extending or retracting the elongate member telescopically relative to the cylinder while maintaining the wave-driven pumping cycle to pump fluid throughout the tidal period.

14. The method of Claim 13, further comprising substantially maintaining the height of the cylinder (102) in the body of water during a tidal period.

15. The method of Claim 14, further comprising operating the pumping device in a body of water in which the change in average depth of the water between high and low tide is up to 12 m and extending the elongate member (118) by up to 12 m from the cylinder (102) to adjust to a high tide, whilst allowing the elongate member to extend further from the cylinder to accommodate waves in the body of water at high tide.

## Patentansprüche

1. Wasserbetriebene Pumpvorrichtung (100, 176, 182, 200) zum Positionieren in einem Gewässer, wobei die Pumpvorrichtung Folgendes umfasst:
einen untertauchbaren Zylinder (102), der am Boden (108) des Gewässers zu verankern ist, wobei der Zylinder eine Bohrung (116) definiert;
einen Unterwasser-Schwimmkörper (114), der auf den Zylinder einwirkt, wobei der Unterwasser-Schwimmkörper so angeordnet ist, dass er den Zylinder im Wasser in eine aufrechte Position drängt;
einen Oberflächen-Schwimmkörper (126), der so angeordnet ist, dass er auf der oder nahe genug zur Oberfläche des verwendeten Gewässers treibt, so dass er sich entsprechend der Bewegungen der Wellen und der Gezeiten in dem Gewässer auf und ab bewegt; und
ein längliches Element (118), das vom Oberflächen-Schwimmkörper abgehängt ist, wobei das längliche Element sich teleskopisch in die Bohrung des untertauchbaren Zylinders erstreckt, um eine Pumpenkammer (148) im Zylinder zu definieren; wobei
das Volumen der Pumpenkammer in einem Pumpzyklus mit der Wellenbewegung variiert, um bei einem Aufwärtshub des länglichen Elements Flüssigkeit in die Pumpenkammer zu ziehen und bei einem Abwärtshub des länglichen Elements Flüssigkeit aus der Pumpenkammer heraus zu pumpen;
die Länge der Pumpenkammer mit der Gezeitenbewegung variiert, um durch das Ausdehnen oder Zurückziehen des länglichen Elements im Verhältnis zum Zylinder Anpassungen an die Gezeitenhöhe vorzunehmen, während effektive Pumpzyklen über einen Bereich der Gezeiten fortgesetzt werden, ohne dass der Zylinder im Verhältnis zum Boden des Gewässers bewegt werden muss; und
in dem Maße, wie das längliche Element in die Bohrung des Zylinders zurückgezogen wird, das längliche Element einen größten Teil des Querschnittbereichs der Bohrung belegt.

2. Vorrichtung nach Anspruch 1, wobei die Vorrichtung so konfiguriert ist, dass der Abwärtshub des länglichen Elements (118) der Haupt- oder einzige Arbeitshub ist.

3. Vorrichtung nach Anspruch 1 oder Anspruch 2, ferner umfassend einen Einlass (14) an einem unteren Endbereich (132) des Zylinders (102), wobei der Einlass mit der Pumpenkammer (148) in Verbindung steht und so konfiguriert ist, dass die Flüssigkeit bei einem Aufwärtshub des länglichen Elements (118) in die Pumpenkammer strömen kann.

4. Vorrichtung nach einem der vorhergehenden Ansprüche, wobei das längliche Element (118) einen inneren Hohlraum (178) aufweist, der Ballast enthält.

5. Vorrichtung nach einem der vorhergehenden Ansprüche, wobei in der Bohrung (116) ein Zwischenraum (166) zwischen dem Zylinder (102) und dem länglichen Element (118) definiert ist, wobei der Zwischenraum eine Breite von weniger als 2 % des Durchmessers des länglichen Elements aufweist.

6. Vorrichtung nach Anspruch 5, wobei das längliche Element (118) sich frei in der Bohrung (116) bewegt.

7. Vorrichtung nach Anspruch 6, wobei im Zwischenraum (166) Lager (162, 164) bereitgestellt sind.

8. Vorrichtung nach einem der Ansprüche 5 bis 7, wobei die Vorrichtung so konfiguriert ist, dass, wenn sie im Einsatz ist, Pflanzen oder Algen sich im Zwischenraum (166) ansammeln, um die Bewegung des länglichen Elements (118) im Zylinder (102) zu schmieren.

9. Vorrichtung nach Anspruch 8, wobei an einem Eingang zum Zwischenraum (166) ein Schaber bereitgestellt ist, um eine überschüssige Dicke von Pflanzen zu entfernen, während sich das längliche Element (118) im Zylinder (102) bewegt.

10. Vorrichtung nach einem der Ansprüche 5 bis 9, wobei die Vorrichtung so konfiguriert ist, dass beim Einsatz die Bewegung des länglichen Elements (118) im Zylinder (118) durch einen Wasserfilm im Zwischenraum (166) geschmiert wird.

11. Vorrichtung nach einem der vorhergehenden Ansprüche, wobei der Zylinder (102) einen einzelnen Befestigungspunkt aufweist, an dem eine Kette (110) befestigt werden kann, um den Zylinder am Boden (108) des Gewässers zu verankern.

12. Verfahren nach einem der vorhergehenden Ansprüche, wobei das längliche Element (118) einen Durchmesser aufweist, der wenigstens 90 % des Durchmessers der Bohrung (116) beträgt.

13. Verfahren zum Pumpen von Flüssigkeit unter Verwendung einer wasserbetriebenen Vorrichtung nach Anspruch 1 (100, 176, 182, 200), wobei die Pumpvorrichtung Folgendes umfasst: einen untertauchbaren Zylinder (102), der durch Auftriebskraft in eine aufrechte Position gedrängt wird, ein längliches Element (118) in teleskopischem Verhältnis im Zylinder und einen Schwimmkörper (126), der über dem Zylinder angeordnet und mit dem länglichen Element verbunden ist, wobei der Schwimmkörper und das längliche Element so angeordnet sind, dass sie sich mit der Wellen- und Gezeitenbewegung im Gewässer im Verhältnis zum Zylinder hin- und herbewegen, wobei das Verfahren Folgendes umfasst:
Pumpen von Flüssigkeit während eines von Wellen angetriebenen Pumpzyklus, wobei eine Wellenbewegung im Gewässer den Schwimmkörper und das längliche Element veranlasst, sich im Verhältnis zum Zylinder hin- und herzubewegen, mit einer Frequenz und in einem Maß, die von der Frequenz und der Amplitude von Wellen im Gewässer gesteuert werden; und
Anpassen an den Tidenhub im Gewässer während einer Gezeitendauer durch teleskopisches Ausdehnen oder Zurückziehen des länglichen Elements im Verhältnis zum Zylinder, während der von Wellen angetriebene Pumpzyklus zum Pumpen von Flüssigkeit über die Gezeitendauer aufrecht erhalten wird.

14. Verfahren nach Anspruch 13, ferner umfassend das im Wesentlichen Aufrechterhalten der Höhe des Zylinders (102) im Gewässer während einer Gezeitendauer.

15. Verfahren nach Anspruch 14, ferner umfassend das Betreiben der Pumpvorrichtung in einem Gewässer, in dem die Veränderung des mittleren Wasserstandes zwischen Hoch- und Niedrigwasser bis zu 12 m beträgt, und das Ausdehnen des länglichen Elements (118) um bis zu 12 m vom Zylinder (102) weg zum Anpassen an ein Hochwasser, während zugelassen wird, dass sich das längliche Element weiter vom Zylinder weg erstreckt, um bei Hochwasser Wellen im Gewässer aufzunehmen.

## Revendications

1. Dispositif de pompage entraîné par les vagues (100, 176, 182, 200) destiné à être localisé dans une masse d'eau, le dispositif de pompage comprenant :
un cylindre submersible (102) devant être ancré au lit (108) de la masse d'eau, le cylindre définissant un alésage (116) ;
un flotteur sous-marin (114) agissant sur le cylindre, le flotteur sous-marin étant agencé pour pousser le cylindre dans une orientation verticale dans l'eau ;
un flotteur de surface (126) agencé pour flotter à, ou assez proche de, la surface de la masse d'eau en utilisation pour se déplacer vers le haut et vers le bas dans la masse d'eau en conformité avec le mouvement des vagues et le mouvement des marées ; et
un élément allongé (118) dépendant du flotteur de surface, l'élément allongé s'étendant télescopiquement dans l'alésage du cylindre submersible pour définir une chambre de pompage (148) au sein du cylindre ; dans lequel :
le volume de la chambre de pompage varie avec le mouvement des vagues dans un cycle de pompage pour aspirer du fluide dans la chambre de pompage sur une course ascendante de l'élément allongé et pour pomper du fluide hors de la chambre de pompage sur une course descendante de l'élément allongé ;
la longueur de la chambre de pompage varie avec le mouvement de marée pour s'ajuster à une profondeur de marée changeante en étendant ou en rétractant l'élément allongé par rapport au cylindre pendant que des cycles de pompage efficaces continuent sur une amplitude de marée sans qu'il soit nécessaire de déplacer le cylindre par rapport au lit de la masse d'eau ; et
dans la mesure où l'élément allongé est rétracté dans l'alésage du cylindre, l'élément allongé occupe une majorité de l'aire en coupe de l'alésage.

2. Dispositif selon la revendication 1, dans lequel le dispositif est configuré de sorte que la course descendante de l'élément allongé (118) est la course de travail principale ou la seule course de travail.

3. Dispositif selon la revendication 1 ou 2, comprenant en outre une admission (140) au niveau d'une région d'extrémité inférieure (132) du cylindre (102), l'admission communiquant avec la chambre de pompage (148) et étant configurée pour autoriser du fluide dans la chambre de pompage sur une course ascendante de l'élément allongé (118).

4. Dispositif selon l'une quelconque des revendications précédentes, dans lequel l'élément allongé (118) a une cavité interne (178) qui contient un ballast.

5. Dispositif selon l'une quelconque des revendications précédentes, dans lequel une région de jeu (166) est définie entre le cylindre (102) et l'élément allongé (118) au sein de l'alésage (116), la région de jeu ayant une largeur qui est inférieure à 2 % du diamètre de l'élément allongé.

6. Dispositif selon la revendication 5, dans lequel l'élément allongé (118) est un ajustement glissant au sein de l'alésage (116).

7. Dispositif selon la revendication 6, dans lequel des paliers (162, 164) sont agencés au sein de la région de jeu (166).

8. Dispositif selon l'une quelconque des revendications 5 à 7, dans lequel le dispositif est configuré de sorte qu'en utilisation, les végétaux ou algues s'accumulent dans la région de jeu (166) afin de lubrifier le déplacement de l'élément allongé (118) au sein du cylindre (102).

9. Dispositif selon la revendication 8, dans lequel un racloir est agencé au niveau d'une entrée de la région de jeu (166) pour éliminer une épaisseur excessive de végétaux pendant le déplacement de l'élément allongé (118) au sein du cylindre (102).

10. Dispositif selon l'une quelconque des revendications 5 à 9, dans lequel le dispositif est configuré de sorte qu'en utilisation, un film d'eau dans la région de jeu (166) lubrifie le déplacement de l'élément allongé (118) au sein du cylindre (102).

11. Dispositif selon l'une quelconque des revendications précédentes, dans lequel le cylindre (102) inclut un point d'attache unique auquel un câble d'attache (110) peut se fixer pour ancrer le cylindre au lit (108) de la masse d'eau.

12. Dispositif selon l'une quelconque des revendications précédentes, dans lequel l'élément allongé (118) a un diamètre qui est d'au moins 90 % du diamètre de l'alésage (116).

13. Procédé de pompage de fluide en utilisant un dispositif de pompage entraîné par les vagues (100, 176, 182, 200) selon la revendication 1, le dispositif de pompage comprenant un cylindre submergé (102) poussé vers une position verticale par flottaison, un élément allongé (118) en relation télescopique au sein du cylindre, et un flotteur (126) agencé au-dessus du cylindre et raccordé à l'élément allongé, le flotteur et l'élément allongé étant agencés pour faire des va-et-vient par rapport au cylindre avec le mouvement des vagues et le mouvement de marée dans la masse d'eau, dans lequel le procédé comprend :
le pompage de fluide pendant un cycle de pompage entraîné par les vagues, moyennant quoi le mouvement des vagues dans la masse d'eau provoque un va-et-vient du flotteur et de l'élément allongé par rapport au cylindre à une fréquence et dans la mesure de l'entraînement de la fréquence et de l'amplitude des vagues dans la masse d'eau ; et
l'ajustement à la variation de marée dans la masse d'eau pendant une période de marée en étendant ou rétractant l'élément allongé télescopiquement par rapport au cylindre tout en maintenant le cycle de pompage entraîné par les vagues afin de pomper du fluide tout au long de la période de marée.

14. Procédé selon la revendication 13, comprenant en outre le maintien substantiel de la hauteur du cylindre (102) dans la masse d'eau pendant une période de marée.

15. Procédé selon la revendication 14, comprenant en outre l'exploitation du dispositif de pompage dans une masse d'eau dans laquelle le changement dans la profondeur moyenne de l'eau entre la marée haute et la marée basse va jusqu'à 12 m et l'extension de l'élément allongé (118) de jusqu'à 12 m à partir du cylindre (102) afin de s'ajuster à une marée haute, tout en permettant à l'élément allongé de s'étendre plus loin à partir du cylindre afin de loger les vagues dans la masse d'eau à marée haute.
